# EUROPÄISCHE PATENTSCHRIFT

(11) **EP 0 985 866 B1**
(45) Veröffentlichungstag und Bekanntmachung des Hinweises auf die Patenterteilung: **26.02.2003**
(21) Anmeldenummer: 99116548.1
(22) Anmeldetag: 24.08.1999
(51) Int. Cl.: F16L 15/00

(54) **Fitting für ein Rohr**
Pipe fitting
Raccord de tuyau

(30) Priorität: 12.09.1998 DE 19841801
(43) Veröffentlichungstag der Anmeldung: 15.03.2000
(73) Patentinhaber: Uponor Innovation AB, 513 81 Fristad (SE)
(72) Erfinder: Riesselmann, Franz-Josef, 49393 Lohne (DE); Brägelmann, Peter, 48607 Ochtrup (DE)
(74) Vertreter: Hilleringmann, Jochen, Dipl.-Ing.

(56) Entgegenhaltungen:
- EP-A- 0 713 042
- WO-A-96/03587
- FR-A- 2 598 855

## Beschreibung

Die Erfindung betrifft einen Fitting, an den zur Herstellung einer Rohrverbindung ein Rohr, insbesondere Kunststoff- oder Kunststoff-Metall-Verbundrohr anschließbar ist. Insbesondere betrifft die Erfindung einen derartigen Fitting aus Kunststoff.

In der jüngsten Vergangenheit wurden verstärkt Anstrengungen unternommen, die bisher üblicherweise aus Metall bestehenden Fittings durch solche aus Kunststoff zu ersetzen. Kunststoff-Fittings sind im Hinblick auf Korrosionsfähigkeit von Vorteil. Allerdings ist Kunststoffmaterial weniger stabil als Metall, so daß die Gefahr besteht, daß der Fitting bei der Montage bis zur Unbrauchbarkeit zerstört wird. Diese Gefahr besteht insbesondere bei Fittingen mit Gewinden, die mit einer anderen Einheit des Leitungssystems verschraubt werden.

Aus WO-A-96/03587, DE-U-93 10 556, DE-A-27 39 714 und US-A-4 046 052 ist es allgemein bekannt, bei Verschraubungsteilen zwischen dem Werkzeugangreifteil und dem Verschraubungskörper eine das bei Drehung des Werkzeugangreifteils auf den Verschraubungskörper wirkende Drehmoment begrenzende Einrichtung anzuordnen.

Der Erfindung liegt die Aufgabe zugrunde, einen Fitting zu schaffen, bei dem die Gefahr der Unbrauchbarkeit beim Festschrauben an einer anderen Einheit des Leitungssystems reduziert ist.

Zur Lösung dieser Aufgabe wird mit der Erfindung ein Fitting mit den Merkmalen des Ansprüchs 1 vorgeschlagen. Die Unteransprüche beziehen sich auf spezielle Ausgestaltungen der Erfindung.

Bei dem erfindungsgemäßen Fitting sind derjenige Teil des Fittings, an den zwecks Verdrehung des Fittings zum Verschrauben desselben ein Werkzeug (Schraubenschlüssel, Zange o.dgl.) angesetzt wird, und der Fittingkörper über eine das Drehmoment begrenzende Einrichtung verbunden. Allgemein gesagt handelt es sich dabei um eine Einrichtung, deren Scherfestigkeit geringer ist als die Scherfestigkeit des Fittingkörpers. Wird also der Fittingkörper festgeschraubt, so wird bei Überschreitung eines durch die Scherfestigkeit der Drehmoment-Begrenzungseinrichtung definierten von dem Werkzeugangreifteil ausgehenden Drehmoments die Verbindung des Werkzeugangreifteils zum Fittingkörper aufgehoben.

Bei dem erfindungsgemäßen Fittingkörper ist also der Kraftschluß der Verbindung zwischen dem Werkzeugangreifteil und dem Fittingkörper entsprechend gewählt bzw. eingestellt.

Der Fittingkörper und der Werkzeugangreifteil sind einstückig miteinander verbunden, wobei durch Einbringen von Durchgängen, Aussparungen, Vertiefungen im Verbindungsbereich beider Elemente des Fittings für eine Materialschwächung gesorgt wird, die nach Art einer Sollbruchstelle wirkt und sich konzentrisch um die Längsachse des Fittings erstreckt.

Nachfolgend werden Ausführungsbeispiele der Erfindung anhand der Zeichnung näher erläutert. Im einzelnen zeigen:
- Fig. 1: einen Halbschnitt durch einen Fitting gemäß einem ersten Ausführungsbeispiel der Erfindung,
- Fig. 2: einen Schnitt entlang der Linie II-II der Fig. 1,
- Fig. 3: einen Halbschnitt durch einen Fitting gemäß einem zweiten Ausführungsbeispiel und
- Fig. 4: einen Schnitt entlang der Linie IV-IV der Fig. 3,

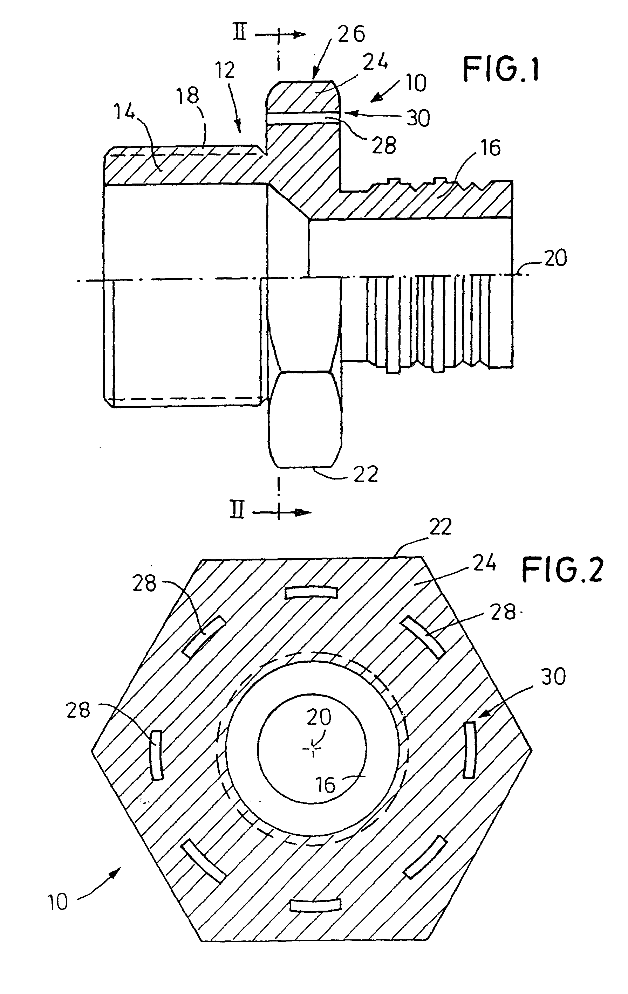

Fign. 1 und 2 zeigen Darstellungen eines Fittings 10 mit einer Drehmomentbegrenzung. Der Fitting 10 weist einen Fittingkörper 12 mit einem Gewindeteil 14 und einem Rohranschlußteil 16 auf. Der Gewindeteil 14 weist ein Außengewinde 18 auf, während der Rohranschlußteil 16 als von dem Gewindeteil 14 abstehender Stutzen ausgebildet ist.

Zum Verschrauben des Fittings 10 mit einer Anschluß- oder sonstigen Einheit des Leitungssystems wird der Fittingkörper 12 um seine Längsachse 20 gedreht. Dazu bedient man sich eines Werkzeuges z.B. in Form eines Schraubenschlusses, der auf eine Außensechskantstruktur 22 eines normalerweise radial überstehenden Bundes 24 aufgesetzt wird. Dieser Bund 24 mit seiner Außensechskantstruktur bildet den Werkzeugangreifteil 26 des Fittings 10.

Wie in den Fign. 1 und 2 gezeigt, sind der Bund 24 und der Fittingkörper 12 einstückig ausgebildet. Im Übergangsbereich vom Fittingkörper 12 zum Bund 24 sind mehrere parallel zur Längsachse 20 verlaufende Durchgänge 28 in den Fitting 10 eingebracht, die insbesondere nach Art von Ringsegmenten geformt sind. Dadurch ergibt sich eine Schwächung der Verbindung von Bund 24 und Fittingkörper 12. Diese Sollbruchstellenzone ist konzentrisch zur Längsachse 20 des Fittingkörpers 12. Hierdurch wiederum entsteht eine (konzentrisch) angeordnete Drehmoment-Begrenzungseinrichtung 30; denn durch die Sollbruchstellenzone wird ein Drehmoment, das mittels des Werkzeuges auf den Bund 24 aufgebracht und über diesen auf den Fittingkörper 12 wirkt, lediglich bis zu einem durch die Sollbruchzone definierten maximalen Wert weitergeleitet. Da die Verbindung (Werkzeugangreifteil 30) des Bundes 24 mit dem Fittingkörper also weniger scherfest ist als der Fittingkörper, kann dieser also beim Festschrauben vor einer Zerstörung geschützt werden.

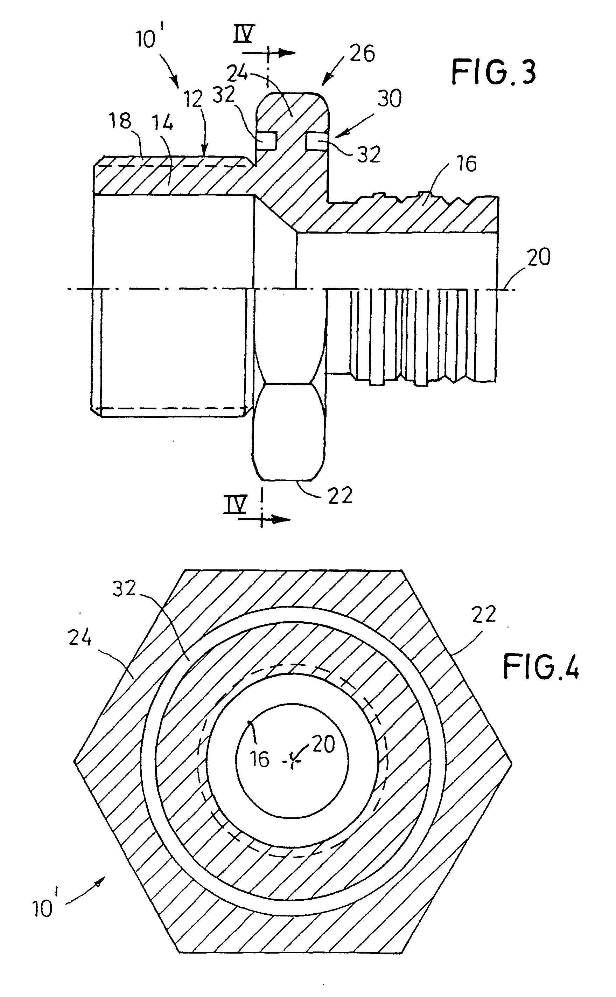

Der Unterschied der Ausführungsform nach Fign. 3 und 4 gegenüber dem Fitting 10 gemäß Fign. 1 und 2 besteht darin, daß die Materialschwächung im Verbindungsbereich von Bund 24 und Fittingkörper 12 durch zwei einander abgewandten Ringnuten 32 erzielt ist, die in entgegengesetzten Richtungen der Längsachsenerstreckung des Fittings 10' offen sind. Ansonsten sind in Fign. 3 und 4 und Fign. 1 und 2 gleiche bzw. gleichwirkende Teile mit den gleichen Bezugszeichen versehen.

Durch das Anordnen und Ausbilden einer zur Längsachse des Fittings konzentrischen Ringzone mit geringerer Scherfestigkeit als der Fittingkörper ist gewährleistet, daß beim Festschrauben des Fittings keine die Dichtfunktion des Fittings beeinträchtigenden Zerstörungen des Fittings auftreten können. Damit kann der Fitting aus Kunststoffmaterial gefertigt werden anstelle von Metall, was u.a. im Hinblick auf Korrosionserscheinungen vorteilhaft ist.

## Patentansprüche

1. Fitting für ein Rohr mit
- einem Fittingkörper (12) mit einer Längsachse (20), der einen Rohranschlussteil (16) für den dichten Anschluss eines Rohres und ein Gewinde (18) zum Verschrauben des Fittingkörpers (12) mit einer Anschlusseinheit aufweist, und
- einem Werkzeugangreifteil (26) am Fittingkörper (12), an den ein Werkzeug zum Verdrehen des Fittingkörpers (12) um dessen Längsachse (20) zwecks Verschraubung mit der Anschlusseinheit ansetzbar ist,
- wobei zwischen dem Werkzeugangreifteil (26) und dem Fittingkörper (12) eine das bei Drehung des Werkzeugangreifteils (26) auf den Fittingkörper (12) wirkende Drehmoment begrenzende Einrichtung (30) angeordnet ist,
**dadurch gekennzeichnet,**
- **dass** die Drehmoment-Begrenzungseinrichtung (30) eine Sollbruchstellenringzone ist, die sich konzentrisch zur Längsachse (20) des Fittingkörpers (12) erstreckt und mehrere parallel zur Längsachse (20) verlaufende Durchgänge (28) oder Aussparungen oder mindestens eine zumindest abschnittsweise konzentrisch verlaufende in Erstreckung der Längsachse (20) offene Aussparung (32) aufweisen.

2. Fitting nach Anspruch 1, **dadurch gekennzeichnet, dass** zwei Gruppen von mit ihren offenen Seiten einander abgewandten Aussparungen vorgesehen sind.

3. Fitting nach Anspruch 1 oder 2, **dadurch gekennzeichnet, dass** die Durchgänge (28) Ringsegmentform aufweisen.

4. Fitting nach einem der Ansprüche 1 bis 3, **dadurch gekennzeichnet, dass** der Fittingkörper (12) und insbesondere auch der Werkzeugangreifteil (26) aus Kunststoff bestehen.

## Claims

1. A pipe fitting comprising
- a fitting body (12) with a longitudinal axis (20), having a pipe connection member (16) for the sealed connection of a pipe and a thread (18) for threadedly joining the fitting body (12) to a connection unit, and
- a portion (26) on the fitting body (12) to be engaged by a tool, to which a tool for turning the fitting body (12) about its longitudinal axis (20) may be applied for threadedly joining the same to the connection unit,
- means (30) being provided between the tool engaging portion (26) and the fitting body (12) that limit the torque acting on the fitting body (12) when the tool engaging portion (26) is turned,
**characterized in that**
- the torque limiting means (30) is an annular rated breaking zone that extends concentrically to the longitudinal axis (20) of the fitting body (12) and comprises a plurality of passages (28) or recesses extending in parallel to the longitudinal axis (20), or at least a recess extending concentrically at least in portions and being open in the direction of the longitudinal axis (20).

2. The fitting of claim 1, where two groups of recesses are provided with their open sides facing away from each other.

3. The fitting of claim 1 or 2, wherein the passages (28) are in the shape of ring segments.

4. The fitting of one of claims 1 to 3, wherein the fitting body (12) and, in particular, the tool engaging portion (26) are made of plastic material.

## Revendications

1. Raccord de tuyau comprenant
- un corps de raccord (12) avec un axe longitudinal (20), qui est formé par une pièce de raccord tubulaire (16) pour le raccordement étanche d'un tuyau et par une pièce filetée (18) destinée à visser le corps de raccord (12) avec une unité de raccordement, et
- une pièce pour l'application d'un outil (26) au niveau du corps de raccord (12), contre laquelle peut être posé un outil pour faire tourner le corps de raccord (12) autour de son axe longitudinal (20) afin de le visser avec l'unité de raccordement,
- sachant qu'il est prévu entre la pièce pour l'application d'un outil (26) et le corps de raccord (12) un dispositif (30) destiné à limiter le couple de rotation exercé sur le corps de raccord (12) pendant la rotation de la pièce pour l'application d'un outil (26),
**caractérisé en ce que**
- le dispositif de limitation du couple de rotation (30) est une zone annulaire de rupture théorique, qui est concentrique à l'axe longitudinal (20) du corps de raccord (12) et comporte plusieurs passages (28) ou évidements parallèles à l'axe longitudinal (20) ou au moins un évidement (32) concentrique du moins en partie, ouvert dans le sens de l'axe longitudinal (20).

2. Raccord de tuyau selon la revendication 1, **caractérisé en ce qu'**il est prévu deux groupes. d'évidements opposés l'un à l'autre par leurs côtés ouverts.

3. Raccord de tuyau selon la revendication 1 ou 2, **caractérisé en ce que** les passages (28) sont conçus sous forme de segments annulaires.

4. Raccord de tuyau selon une des revendications 1 à 3, **caractérisé en ce que** le corps de raccord (12) et, en particulier aussi, la pièce pour l'application d'un outil (26) sont réalisés en matière plastique.
